# EUROPÄISCHE PATENTANMELDUNG

(11) **EP 1 400 160 A1**
(43) Veröffentlichungstag der Anmeldung: **24.03.2004**
(21) Anmeldenummer: 03405657.2
(22) Anmeldetag: 09.09.2003
(51) Int. Cl.: A01B 71/06, A01B 63/00

(54) **Pendelvorrichtung für eine Feldbearbeitungsmaschine, insbesondere einen Bandheuer**

(30) Priorität: 18.09.2002 CH 15782002
(71) Anmelder: Rogenmoser, Walter, 6314 Unterägeri (CH)
(72) Erfinder: Rogenmoser, Walter, 6314 Unterägeri (CH)
(74) Vertreter: Liebetanz, Michael, Dipl.-Phys.

(57) **Zusammenfassung**

Eine Pendelvorrichtung für eine Feldbearbeitungsmaschine, insbesondere einen Bandheuer, verfügt über eine erste Aufhängeeinrichtung (2, 15) zur Verbindung der Pendelvorrichtung mit einer Zugmaschine, und über eine zweite Aufhängeeinrichtung (35) für die besagte Feldbearbeitungsmaschine. Eine Antriebswelle (5) ist für die Übertragung eines in Verbindung mit der Zugmaschine stehenden Antriebs an die besagte Feldbearbeitungsmaschine vorgesehen. Dabei ist die Antriebswelle (5) in einem Rohr gelagert, das an einem Chassis (10) der Pendelvorrichtung befestigt ist, welches mit der ersten Aufhängeeinrichtung (15) verbunden ist. Eine Hülse ist drehbar um das besagte Rohr angeordnet, die mit der zweiten Aufhängeeinrichtung (35) für die besagte Feldbearbeitungsmaschine fest verbunden ist, so dass die besagte Feldbearbeitungsmaschine gegenüber der durch die Zugmaschine vorgegebene horizontale Ebene um die Achse der Antriebswelle (5) verschwenkbar ist.

## Beschreibung

Die Erfindung betrifft eine Pendelvorrichtung für eine Feldbearbeitungsmaschine, insbesondere einen Bandheuer.

Aus dem Stand der Technik sind verschiedene Bearbeitungsvorrichtungen für das Mähen, Zusammenführen und das Aufnehmen von Gras und Heu bekannt. Diese Bearbeitungsvorrichtungen sind an einer Zugmaschine befestigt und werden zumeist mechanisch angetrieben. Dabei besteht das Problem, dass die Vorrichtungen parallel zur Zugmaschine und damit parallel zum Boden in Höhe der Zugmaschine ausgerichtet sind. Bei welligen Böden kann dies dazu führen, dass die Bearbeitungsvorrichtung mit ihrem Mähwerk, einem Bandheuer oder einer anderen Vorrichtung vom Boden abhebt und somit nicht mehr korrekt arbeitet, oder dass im Gegensatz dazu sich die Bearbeitungsvorrichtung dem Boden nähert oder sogar in diesen stösst und somit entweder den Boden oder die Bearbeitungsvorrichtung beschädigt.

Für ein Mähwerk ist eine Pendel vorrichtung bekannt, die jedoch für einen Bandheuer nicht einsetzbar ist, da der Platzbedarf für diese Vorrichtung für die Haltekonstruktion, die an der Zugmaschine befestigt wird, zu schwer wird.

Ausgehend von diesem Stand der Technik liegt der Erfindung daher die Aufgabe zu Grunde, eine Pendelvorrichtung für einen Bandheuer anzugeben, bei dem die genannten Nachteile vermieden werden.

Die vorgenannte Aufgabe wird gemäss der Erfindung mit einer Pendelvorrichtung mit den Merkmalen des Anspruchs 1 gelöst.

Weitere vorteilhafte Ausführungsformen, insbesondere in Bezug auf eine seitliche Verschiebbarkeit der Pendelvorrichtung, ohne dass die Auslenkungsmöglichkeit verringert wird, sind in den Unteransprüchen bezeichnet.

Die Erfindung wird nun anhand eines beispielhaften Ausführungsbeispiel unter Zuhilfenahme der Zeichnungen näher beschrieben.
Es zeigen:
- Fig. 1: eine Seiteneinsicht einer Pendelvorrichtung gemäss der Erfindung,
- Fig. 2: eine Ansicht einer Pendelvorrichtung gemäss der Erfindung, vom Antriebsfahrzeug aus gesehen,
- Fig. 3: eine geschnittene Seitenansicht der Lagerung der Pendelvorrichtung,
- Fig. 4: eine Seiteneinsicht einer Pendelvorrichtung nach Fig. 1 mit einer Verschwenkung um 26 Grad, und
- Fig. 5: eine Seiteneinsicht einer Pendelvorrichtung nach Fig. 1 mit einer seitlichen Verschiebung um 150 Millimeter.

Die Pendelvorrichtung ist auf der einen Seite starr mit dem Antriebsfahrzeug verbunden und auf der gegenüberliegenden Seite ebenfalls starr mit dem Bandheuer. Dabei ist das Stützdreieck, welches über eine Anhebe- und Absenkvorrichtung mit dem Antriebsfahrzeug verbunden ist, mit dem Bezugszeichen 2 versehen. Die Hülse 3, zu der weiter unten noch erklärende Worte zu finden sein werden, ist das um die Achse 4 drehbare Element, an dem der Bandheuer befestigt wird. Mit dem Bezugszeichen 5 ist die Zapfwelle bezeichnet, welche das Band des Bandheuers antreibt.

Diese Zapfwelle 5 weist auf der gegenüberliegenden Seite der Hülse 3 einen Steckzapfen 6 auf, auf den die von der Zugmaschine ausgehende Antriebseinheit aufsetzbar ist.

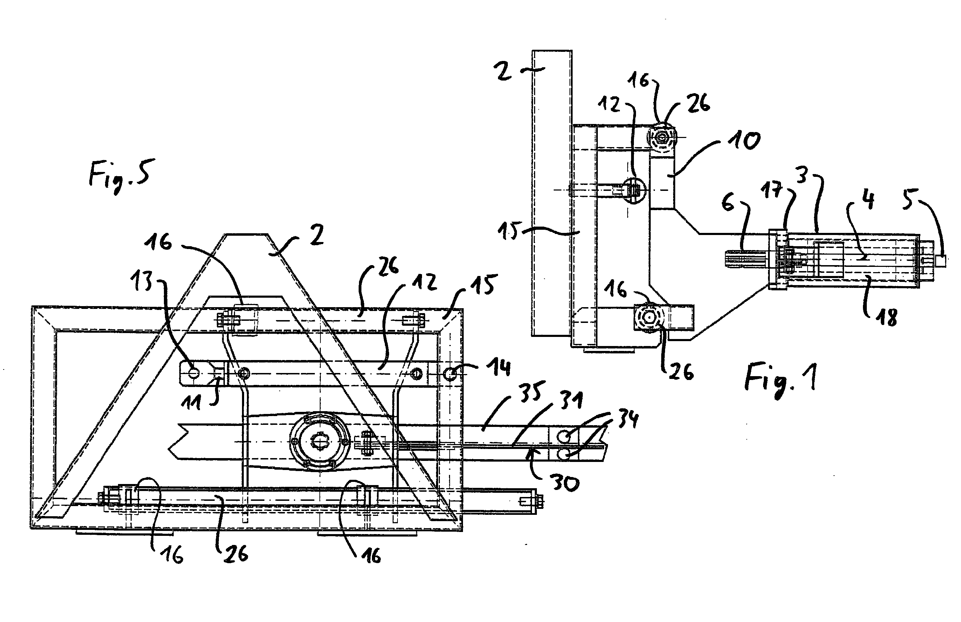

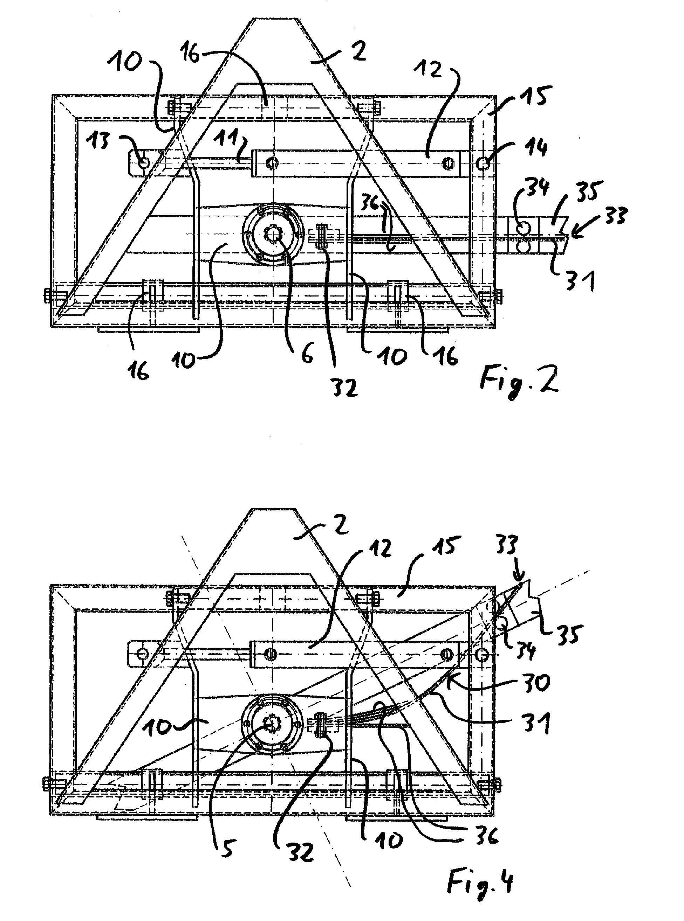

Die weiteren in der Fig. 1 erkennbaren Elemente sind am besten in Zusammenschau mit der Fig. 2 zu erläutern. Mit dem Bezugszeichen 10 ist das seitenverschiebliche Chassis der Pendelvorrichtung bezeichnet. Es ist hier der Kolben 11 eines Hydraulikzylinders 12 zu sehen, der an den Punkten 13 beziehungsweise 14 an dem rechteckigen Rahmen 15 befestigt ist. An dem rechteckigen Rahmen 15 ist ferner oben eine Hülse 16 und unten, seitlich rechts und links, zwei Hülsen 16 vorgesehen, in denen jeweils ein Zylinderrohr 26 geführt ist, welches jeweils mit dem Chassis 10 verbunden ist. Somit kann das Chassis 10 der Pendelvorrichtung durch Ausfahren beziehungsweise Einfahren des Kolbens 11 parallel zur Längsseite des rechteckigen Rahmens 15 verschoben werden, indem die Last an den drei Hülsen 16 auf die beiden Zylinderrohre 26 übertragen wird.

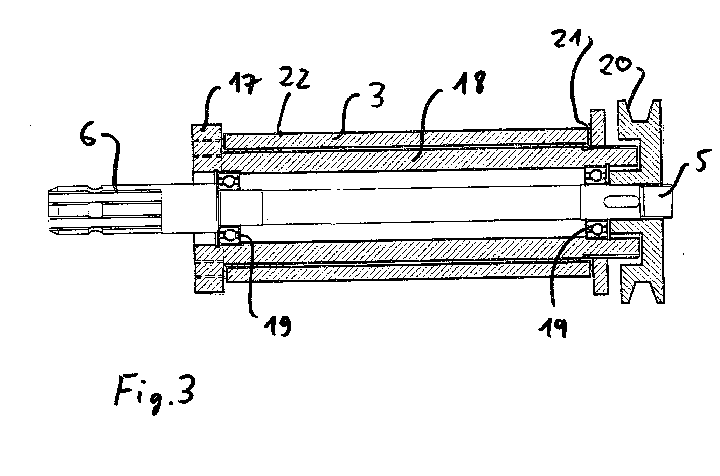

In dem Chassis 10 ist ein Flansch 17 befestigt, der in ein Zentrallagerrohr 18 übergeht. In der Fig. 3 ist nun eine geschnittene Seitenansicht der Lagerung der Pendelvorrichtung dargestellt. Gleiche Merkmale sind in allen Zeichnungen mit den gleichen Bezugszeichen versehen.

In der Fig. 3 ist das durchgehende Zentrallagerrohr 18 dargestellt, welches über den Flansch 17 mit dem Chassis 10 verbunden ist. Somit ist dieses Zentrallagerrohr 18 gegenüber dem Stützdreieck 2 nur seitlich verschiebbar. In dem Zentrallagerrohr 18 sind zwei Kugellager 19 angeordnet, in denen die Zapfwelle 5 rotiert. Das aus der Fig. 1 bekannte Merkmal des Steckzapfens 6 ist längst zu erkennen. Gegenüber der Fig. 1 hinzugefügt ist die Antriebsriemenscheibe 20, die auf der Zapfwelle 5 fest aufsitzt. Mit dem Bezugszeichen 21 ist die Kragenlagerbüchse bezeichnet und die sich um das Zentrallagerrohr 18 drehende Lagerbüchse 22 ist fest mit dem in der Fig. 2 nur angedeuteten Chassisrahmen 35 des Bandheuers verbunden, insbesondere kann sie verschweisst sein. Somit besteht gegenüber dem fest mit dem Stützdreieck verbundenen Zentrallagerrohr 18 einerseits die sich frei drehbare Zapfwelle 5 mit der Antriebsriemenscheibe 20 und andererseits die mit dem Chassisrahmen 35 des Bandheuers verschwenkbare oder drehbare Lagerbüchse 22.

Die Funktion der Pendelvorrichtung ist somit wie folgt. Wenn der Bandheuer, der üblicherweise über Luftreifen an den äusseren Enden der Konstruktion verfügt, über eine seitliche Schräge fährt, werden die Reifen ein entsprechendes Drehmoment auf den Chassisrahmen 35 des Bandheuers übertragen. Somit wird dieses Drehmoment direkt auf die Lagerbüchse 22 übertragen. Diese beginnt sich somit gegenüber dem Zentrallagerrohr 18 zu verdrehen. Davon unabhängig wird der Bandheuer weiterhin durch die zentrale Zapfwelle 5 angetrieben. Die sich beim Drehen der Lagerbüchse 22 ergebende Winkeländerung gegenüber dem Zentrallagerrohr 18 hat auf die Funktion der Kraftübertragung durch die Antriebsriemenscheibe 20 fast keinen Einfluss.

Wesentlich ist nun die Funktion des mit dem Bezugszeichen 30 bezeichneten Rückstellelementes, welches in der Fig. 1 zu erkennen ist. Das Rückstellelement 30 kann insbesondere, wie hier in der Fig. 1 aus einer Feder, insbesondere einer Blattfeder 31 bestehen. Wenn eine Feder eingesetzt wird, dann gäbe der Einsatz einer Spiralfeder nicht den erfindungsgemässen Effekt. Die Blattfeder 31 ist an ihrem einen Ende gelocht und über eine Schrauben-Mutterkonstruktion 32 an dem Chassis 10 befestigt. Das freie Ende 33 der Blattfeder 31 ist zwischen zwei als Anschläge dienende Stifte 34 hindurchgeführt. Die quer zur flachen Seite der Blattfeder 31 angeordneten Stifte 34 sind an dem Chassisrahmen 35 befestigt. Der Abstand der beiden Stifte 34 voneinander ist so gross, dass die flache Seite der Blattfeder 31 mit leichtem Spiel durch sie hindurchgeführt werden. Die Blattfeder 31 steht soweit durch die Stifte 34 hindurch, dass ihr Ende auch bei grösster Winkelablenkung immer noch durch den durch die Stifte 34 vorgegebenen Schlitz hindurchragt.

Neben der Blattfeder 31 sind zwei Rückführungsfedern 36 auf beiden Seiten der Blattfeder 31 angeordnet und über eine Lochung auch mit der besagten Schrauben-Mutterkonstruktion 32 an dem Chassis 10 befestigt. Die Funktion dieser Rückführungsfedern 36 geht aus der Fig. 4 hervor, die eine Seiteneinsicht einer Pendelvorrichtung nach Fig. 1 mit einer Verschwenkung um 26 Grad zeigt. Es ist gut die Verbiegung der Blattfeder 31 zuerkennen, die eine Rückstellkraft auf den Chassisrahmen 35 des Bandheuers ausübt. Dabei stellt die hier obere Rückführungsfeder 36 sicher, dass die Blattfeder 31 nicht über einen Todpunkt klappt und dann die besagte Rückstellkraft nicht mehr ausüben würde. Die untere Rückführungsfeder 36 agiert in der gleichen Weise bei einer Verschwenkung des Chassisrahmens 35 des Bandheuers in die entgegengesetzte Richtung.

Die Fig. 5 schliesslich zeigt eine Seiteneinsicht einer Pendelvorrichtung nach Fig. 1 mit einer seitlichen Verschiebung um 150 Millimeter nach rechts in Fahrrichtung. Es ist zu erkennen, dass das Chassis 10 und der Chassisrahmen 35 bezüglich dem Stützdreieck 2 nach rechts verschoben sind. Die maximal mögliche seitliche Bewegung ist durch die seitliche Verschiebung der Durchführung des Zapfwellenantriebs beschränkt, das heisst die auf den Steckzapfen 6 aufsetzbare Zapfwelle muss sich frei an dem Stützdreieck 2 vorbeibewegen können. Eine Vergrösserung des Seitenhubs ist möglich zum Beispiel durch eine Änderung des Dreiecks 2 auf eine Form eines Rechteckes wie der rechteckige Rahmen 15.

Das Element 2 ist dafür vorgesehen, um die Pendevorrichtung mit der angebauten Feldbearbeitungsmaschine direkt mit einem Schnellkuppeldreieick der Anmelderin zu verbinden und anzukuppeln. Es kann natürlich auch eine herkömmliche 3-Punkt Hydraulik vorgesehen sein. Wesentliche Elemente der Vorrichtung gehen aus den beiliegenden Ansprüchen hervor.

## Patentansprüche

1. Pendelvorrichtung für eine Feldbearbeitungsmaschine, insbesondere einen Bandheuer, mit einer ersten Aufhängeeinrichtung (2, 15) zur Verbindung der Pendelvorrichtung mit einer Zugmaschine, mit einer zweiten Aufhängeeinrichtung (35) für die besagte Feldbearbeitungsmaschine und mit einer Antriebswelle (5) für die Übertragung eines in Verbindung mit der Zugmaschine stehenden Antriebs an die besagte Feldbearbeitungsmaschine, **dadurch gekennzeichnet, dass** die Antriebswelle (5) in einem Rohr (18) gelagert ist, das an einem Chassis (10) der Pendelvorrichtung befestigt ist, welches mit der ersten Aufhängeeinrichtung (15) verbunden ist, dass eine Hülse (22) drehbar um das besagte Rohr (18) angeordnet ist, welche Hülse (22) mit der zweiten Aufhängeeinrichtung (35) für die besagte Feldbearbeitungsmaschine fest verbunden ist, so dass die besagte Feldbearbeitungsmaschine gegenüber der durch die Zugmaschine vorgegebene horizontale Ebene um die Achse (4) der Antriebswelle (5) verschwenkbar ist.

2. Pendelvorrichtung nach Anspruch 1, **dadurch gekennzeichnet, dass** mindestens ein Rückstellelement (31, 36) vorgesehen ist, dass zwischen der zweiten Aufhängeeinrichtung (35) und dem Chassis (10) angeordnet ist.

3. Pendelvorrichtung nach Anspruch 2, **dadurch gekennzeichnet, dass** das mindestens eine Rückstellelement ein nicht proportional wirkendes Rückstellelement und/oder eine Blattfeder (31) ist.

4. Pendelvorrichtung nach Anspruch 3, **dadurch gekennzeichnet, dass** die Blattfeder(n) (31) radial zur Antriebswelle (5) angeordnet ist(sind) und/oder dass die Blattfeder(n) (31) an ihrem einen Ende fest eingespannt und im Bereich ihres anderen Endes zwischen zwei Anschlägen (34) hindurchgeführt ist (sind).

5. Pendelvorrichtung nach Anspruch 4, **dadurch gekennzeichnet, dass** eine einzige Blattfeder (31) vorgesehen ist, die im Anfangsbereich seitlich oberhalb und unterhalb durch ein blattförmiges, mit der Blattfeder (31) eingespanntes Rückstellelement (36) begrenzt ist.

6. Pendelvorrichtung nach einem der Ansprüche 1 bis 5, **dadurch gekennzeichnet, dass** zwischen der ersten Aufhängeeinrichtung (2, 15) zur Verbindung der Pendelvorrichtung mit einer Zugmaschine und dem Chassis (10) der Pendelvorrichtung eine Verschiebeeinrichtung (11, 12, 16, 26) vorgesehen ist, mit der das Chassis (10) der Pendelvorrichtung seitlich horizontal zur ersten Aufhängeeinrichtung (2, 15) verschiebbar ist.

7. Pendelvorrichtung nach Anspruch 6, **dadurch gekennzeichnet, dass** die Verschiebeeinrichtung einen horizontal ausgerichteten Hydraulikzylinder (11, 12) umfasst, der an Chassis (10) und erster Aufhängeeinrichtung (2, 15) befestigt ist.

8. Pendelvorrichtung nach Anspruch 6 oder 7, **dadurch gekennzeichnet, dass** an der ersten Aufhängeeinrichtung (2, 15) mindestens drei Hülsen (16) angeordnet sind, dass zwei seitliche Hülsen (16) ein erstes Zylinderrohr (26) und die mindestens dritte Hülse (16) ein zweites Zylinderrohr (26) umfassen, dass die Zylinderrohre (26) horizontal und parallel zueinander angeordnet ist und jeweils an ihren Enden an dem Chassis (10) befestigt sind.
